(19) Europäisches Patentamt
European Patent Office
Office européen des brevets

(11) **EP 2 975 503 A2**

(12) **EUROPEAN PATENT APPLICATION**

(43) Date of publication:
**20.01.2016 Bulletin 2016/03**

(51) Int Cl.:
***G06F 3/042*** (2006.01)

(21) Application number: **14200514.9**

(22) Date of filing: **30.12.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **17.07.2014 CN 201410342532
16.10.2014 CN 201410549227**

(71) Applicant: **Shenzhen Takee Tech Co., Ltd
Guangdong 518057 (CN)**

(72) Inventors:
• **Liu, Meihong**
**518057 Shenzhen (CN)**
• **Gao, Wei**
**518057 Shenzhen (CN)**
• **Fu, Rongxiang**
**518057 Shenzhen (CN)**

(74) Representative: **Machtalère, Georges et al
Office Kirkpatrick S.A.
Avenue Wolfers, 32
1310 La Hulpe (BE)**

(54) **Touch device and corresponding touch method**

(57) A touch device is disclosed by the present disclosure. The touch device (10,20,30,40,50,60) comprises at least one position sensor (102-1,102-2,102-3,102-4; 202-1,202-2,202-3,202-4,202-5,202-6;302-1,302-2; 402-1,402-2,402-3,402-4,402-5;502-1,502-2,502-3; 602-1); and a controller (104,204,304,404,504,604) connected to the at least one position sensor; the at least one position sensor is disposed in a non-display region (101,201,301,401,501,601) of a screen of the touch device to sense an overhead touch operation over the at least one position sensor; and the controller is configured to obtain overhead touch information according to the overhead touch operation so as to operate according to the overhead touch information. In the aforesaid way, the present disclosure allows a touch medium to accomplish a touch operation without the need of touching the screen so as to make the touch operation convenient and quick and to enhance the entertainment in using the product.

FIG. 1

EP 2 975 503 A2

**Description**

**FIELD OF THE INVENTION**

The present disclosure generally relates to the technical field of touch control, and more particularly, to a touch device and a corresponding touch method thereof.

**BACKGROUND OF THE INVENTION**

As compared to the conventional operational mode of using mice and keyboards, the prior art touch control mode of using a finger to directly touch a screen features simple and intuitive operations, good entertainment and so on. Nowadays, the touch control technologies have found wide application in various electronic products to provide more and more electronic products with the touch screen function, and examples of such electronic products include smart phones, MP3, digital cameras, automatic telling machines (ATMs), GPS navigators, commercial displays for exhibition and so on that have a touch screen. As a kind of simple, convenient and natural means for human-machine interaction, the touch screen allows a user to operate a host machine by simply using a touch medium such as a finger or a touch stylus to touch a graphic or a text displayed on the touch screen. This makes the human-machine interaction straightforward and greatly reduces the complexity of operating the products.

In the prior art, operating a product with a touch screen function, for example, a smart mobile phone having a touch screen, is usually achieved by using a finger to directly touch a graphic or a text on the screen of the mobile phone so that a corresponding operation can be accomplished by the phone according to the position of the finger on the screen. That is, the finger has to make touch with the screen of the mobile phone in order to accomplish the touching operation, and usually the part of the screen that is touched by the finger is required to be relatively clean to ensure the sensitivity to the touch. Moreover, for a user who is doing the washing or is busy doing other work, it is relatively troublesome to operate the mobile phone. For example, the user has to firstly wipe his or her finger dry or interrupt the work at hand and then come close to the phone to perform a touch operation. This makes it very inconvenient for the user to use the mobile phone and degrade the entertainment in the touching operations.

**SUMMARY OF THE INVENTION**

The primary technical problem to be solved by the present disclosure is to provide a touch device and a corresponding touch method thereof, which allows a touch medium to accomplish a touch operation without the need of touching the screen so as to make the touch operation convenient and quick and to enhance the entertainment in using the product.

To solve the aforesaid technical problem, a technical solution adopted by the present disclosure is to provide a touch device. The touch device comprises at least one position sensor and a controller connected to the at least one position sensor; the at least one position sensor is disposed in a non-display region of a screen of the touch device to sense an overhead touch operation over the at least one position sensor; and the controller is configured to obtain overhead touch information according to the overhead touch operation so as to operate according to the overhead touch information.

Preferably, the at least one position sensor may specifically be configured to acquire a sensing coordinate value of a touch point over the screen of the touch device with respect to a sensing coordinate system of the position sensor itself; the controller may be configured to, when only a sensing coordinate value acquired by one position sensor is read, calculate a screen coordinate value of the touch point with respect to a screen coordinate system of the screen of the touch device according to the sensing coordinate value that is read, and is configured to, when sensing coordinate values acquired by at least two of the position sensors respectively are read, select the sensing coordinate value acquired by one of the at least two position sensors that may have a predetermined priority level according to priority levels of the at least two position sensors and calculate the screen coordinate value of the touch point with respect to the screen coordinate system of the screen of the touch device according to the sensing coordinate value acquired by the position sensor that has the predetermined priority level; and the controller may further be configured to operate according to the screen coordinate value serving as the overhead touch information.

Preferably, the sensing coordinate value may be a coordinate value of the touch point in a plane parallel to the screen of the touch device, and the controller may be specifically configured to transform the sensing coordinate value that is read into the screen coordinate value of the touch point with respect to the screen coordinate system of the screen of the touch device according to mapping relationships between the sensing coordinate system of the position sensor corresponding to the sensing coordinate value that is read and the screen coordinate system of the screen of the touch device.

Preferably, some of the position sensors may be located in the non-display region at a top side of the screen of the touch device, while the rest of the position sensors may be located in the non-display region at a bottom side of the screen of the touch device.

Preferably, some of the position sensors may be located in the non-display region at a left side of the screen of the touch device, while the rest of the position sensors may be located in the non-display region at a right side of the screen of the touch device.

Preferably, some of the position sensors may be located in the non-display region at a left side of the screen of the touch device, while the rest of the position sensors may be located in the non-display region at a bottom side of the screen of the touch device.

To solve the aforesaid technical problem, yet another technical solution adopted by the present disclosure is to provide a touch method used in a touch device, which comprises: sensing an overhead touch operation over a screen of the touch device by at least one position sensor; and obtaining overhead touch information by a controller of the touch device according to the overhead touch operation; and performing a corresponding operation according to the overhead touch information.

Preferably, the touch method may further comprise: using the at least one position sensor of the touch device, to acquiring at least one sensing coordinate value of a touch point over the screen of the touch device with respect to a sensing coordinate system of the position sensor itself; when only a sensing coordinate value acquired by one position sensor is read by a controller of the touch device, calculating a screen coordinate value of the touch point with respect to a screen coordinate system of the screen of the touch device according to the sensing coordinate value that is read by the controller; when sensing coordinate values acquired by at least two position sensors respectively may be read by the controller of the touch device, selecting a sensing coordinate value acquired by one of the at least two position sensors that has a predetermined priority level according to priority levels of the at least two position sensors, and calculating the screen coordinate value of the touch point with respect to the screen coordinate system of the screen of the touch device according to the sensing coordinate value acquired by the position sensor that has the predetermined priority level; and performing the corresponding operation according to the screen coordinate value serving as the overhead touch information.

Preferably, the sensing coordinate value may be a coordinate value of the touch point in a plane parallel to the screen of the touch device, and the sensing coordinate value that is read is transformed into the screen coordinate value of the touch point with respect to the screen coordinate system of the screen of the touch device according to mapping relationships between the sensing coordinate system of the position sensor corresponding to the sensing coordinate value that is read and the screen coordinate system of the screen of the touch device.

Preferably, the at least one position sensor may be disposed in a non-display region of the screen of the touch device.

The present disclosure has the following benefits: as compared to the prior art, the touch device of the present disclosure utilizes the position sensor to sense an overhead touch operation over the touch device so that the controller obtains the overhead touch information according to the overhead touch operation and then operates according to the overhead touch information. Thereby, the user who operates an operational device does not need to directly touch the operational device but only simply needs to perform an overhead touch operation within the sensing range of the position sensor. Then, when the overhead touch operation is sensed by the position sensor, the touch information for triggering the touch device to operate can be obtained, thus accomplishing an operation on the touch device. As compared to the operational mode of directly touching the operational device, the operation is done more conveniently and quickly and better entertainment can be obtained in the operation to provide better user experiences. Furthermore, by integrating the position sensor into the touch device, the need of disposing an additional touch apparatus is eliminated, so the production cost can be decreased and the touch device can be carried about by the user conveniently.

**BRIEF DESCRIPTION OF THE DRAWINGS**

FIG. 1 is a schematic structural view of a touch device according to an embodiment of the present disclosure;
FIG. 2 is a schematic structural view of a touch device according to another embodiment of the present disclosure;
FIG. 3 is a schematic view illustrating positional relationships between a sensing coordinate system and a screen coordinate system of a touch device according to yet another embodiment of the present disclosure;
FIG. 4 is a schematic view illustrating positional relationships between a sensing coordinate system and a screen coordinate system of a touch device according to another embodiment of the present disclosure;
FIG. 5 is a schematic structural view of a touch device according to another embodiment of the present disclosure;
FIG. 6 is a schematic structural view of a touch device according to another embodiment of the present disclosure;
FIG. 7 is a schematic structural view of a touch device according to another embodiment of the present disclosure;
FIG. 8 is a schematic structural view of a touch device according to another embodiment of the present disclosure; and

FIG. 9 is a schematic structural view of a touch device according to a further embodiment of the present disclosure.

## DETAILED DESCRIPTION OF THE INVENTION

The present disclosure is mainly intended to achieve an overhead touch operation on touch devices with the touch screen function, such as mobile touch devices (e.g., tablet computers, smart phones, etc.), desktop computers, notebook computers or displays for information exhibition. That is, operations on the touch devices can be accomplished without the need of touching the touch screen of the touch devices.

Hereinafter, the present disclosure will be described in detail with reference to the attached drawings and embodiments.

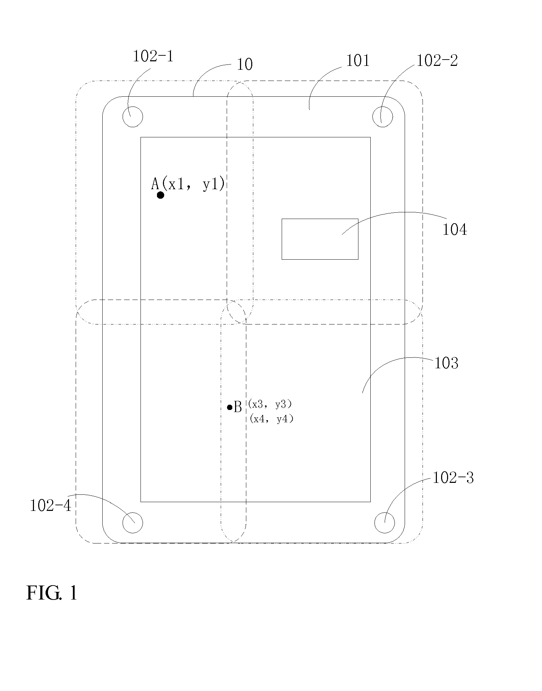

Referring to FIG. 1, a touch device 10 in a touch system according to an embodiment of the present disclosure has a non-display region 101 and a display region 103, and preferably, the touch device 10 is a smart phone or a tablet computer. The touch device 10 comprises position sensors 102 and a controller 104 connected to the position sensors 102. The controller 104 is equivalent to the CPU of the touch device 10 and is disposed within the body of the touch device 10.

In this embodiment, the position sensors 102 are disposed in the non-display region 101 of the screen to sense an overhead touch operation over the position sensors 102. The controller 104 is configured to obtain overhead touch information according to the overhead touch operation so as to operate according to the overhead touch information.

The overhead touch operation means that a user performs an overhead operation outside the touch device 10 so as to accomplish an operation on the touch device 10. In this case, the touch device 10 does not need to be integrated with a conventional touch screen, but only requires a screen simply with the display function. Of course, the operational devices may also be other electronic devices with the touch screen function, such as commercial advertisement screens, MP3, or desktop computers and so on that have the touch screen function. Conventional methods for operating an operational device with the touch screen function is usually to touch a graphic or a text displayed on the touch screen by using a touch medium such as a finger or a touch stylus, and then the operational device will acquire touch information by identifying the position of the touch point so as to perform corresponding operations according to the touch information. For example, when the position of the touch point is identified to be the position of a browser icon, the operational device performs an operation to open the browser. This embodiment of the present disclosure differs from the conventional operational methods in that, position sensors 102 are disposed in the non-display region 101 of the screen of the touch device 10, so the touch operation over the screen can be sensed by the position sensors 102. In this case, instead of touching the screen of the touch device 10, the touch medium such as a finger or a touch stylus can be put outside the touch device 10, e.g., at a certain distance over the screen, but the distance should not exceed the maximum sensing distance of the position sensors 102. Thereby, the position sensors 102 can sense the overhead touch operation of the touch medium, and then the controller 104 operates according to the overhead touch information. In this way, through the position sensors 102, the user can operate the touch device 10 without the need of touching the touch device 10, so the operation is done more conveniently and quickly and better entertainment can be obtained in the operation to provide better user experiences.

In embodiments of the electronic device with both the touch screen function and the overhead touch function of the present disclosure, one of the two touch functions thereof can be enabled while the other is disabled, or both of the two touch functions can be enabled.

Of course, the touch device 10 is not limited to devices with the touch screen function, and it may also be other devices without the touch screen function as long as it can identify the overhead touch information and operate correspondingly according to the overhead touch information.

In this embodiment, there are four position sensors 102, i.e., a first position sensor 102-1, a second position sensor 102-2, a third position sensor 102-3 and a fourth position sensor 102-4.

The four position sensors 102 are disposed at four corners of the screen respectively. As shown in FIG. 1, the first position sensor 102-1 is located at the top left corner of the screen, the second position sensor 102-2 is located at the top right corner of the screen, the third position sensor 102-3 is located at the bottom left corner of the screen, and the fourth position sensor 102-4 is located at the bottom right corner of the screen. The four position sensors 102 are located around the display region symmetrically, which allows for a more pleasant appearance of the touch device 10.

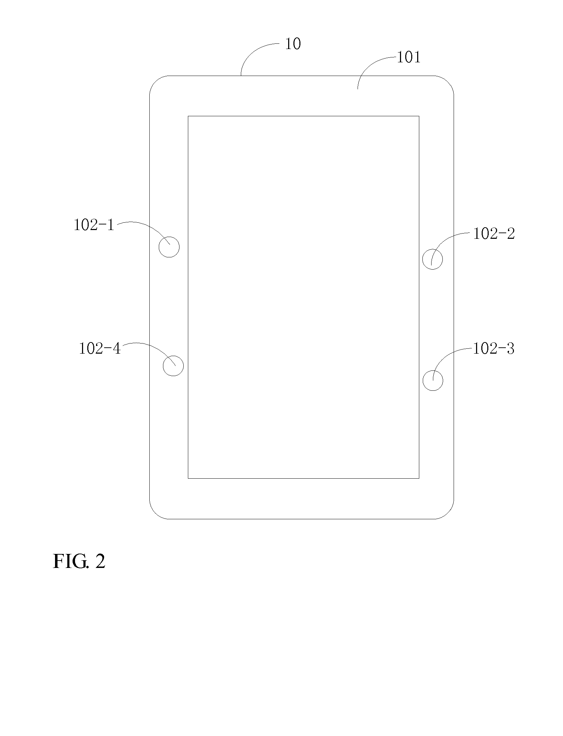

Of course, in other embodiments, the four position sensors 102 may also be disposed in other positions of the non-display region 101 as shown in FIG. 2. For example, the first position sensor 102-1 and the fourth position sensor 102-4 may be located in the non-display region 101 at the left side and are located symmetrically with respect to the horizontal center line of the screen of the touch device 10; the second position sensor 102-2 and the third position sensor 102-3 are located in the non-display region 101 at the right side of the touch device 10 and are located symmetrically with respect to the horizontal center line of the screen of the touch device 10; and two opposite position sensors 102 at different sides are located symmetrically with respect to the vertical center line of the screen of the touch device 10. This allows for a more pleasant appearance of the touch system.

As shown in FIG. 1, four regions circled by the dashed line represent the sensing range of each of the position sensors 102 respectively, and the sensing range of each of the position sensors 102 covers at least 1/4 of the touch device 10. For example, the sensing range of the first position sensor 102-1 covers the top left section of the touch device 10, the sensing range of the second position sensor 102-2 covers the top right section of the touch device 10, the sensing range of the third position sensor 102-3 covers the bottom right section of the touch device 10, and the sensing range of the fourth position sensor 102-4 covers the bottom left section of the touch device 10. The whole screen of the touch device 10 can be covered within the sensing ranges of the position sensors 102 by setting the position of each of the position sensors 102 in the non-display region 101. When a user uses a finger to perform the overhead touch operation on the touch device 10, usually the operation is done in the sensing region of the touch device 10. Because the touch device 10 is within the sensing ranges of the position sensors 102, it can be ensured that the position sensors 102 can sense the overhead touch operation of the user.

The overhead touch information of this embodiment refers to a screen coordinate value of a touch point with respect to a screen coordinate system of the screen of the touch device 10. For a touch screen, the touch function thereof is usually achieved by acquiring the coordinate value of a touch point of a touch medium on the touch screen. However, in this embodiment, the finger of the user does not touch the screen of the touch device 10; and instead, the finger operates in an overhead touch manner, i.e., the finger performs the touch operation overhead. Then, the position sensors 12 sense the overhead touch operation to obtain the screen coordinate value of the touch point of the finger with respect to the screen coordinate system so as to obtain the overhead touch information. Each of the four position sensors 102 is specifically configured to acquire a sensing coordinate value of a touch point over the screen of the touch device 10 with respect to a sensing coordinate system of the position sensor 102 itself, and the sensing coordinate value is a coordinate value of the touch point in a plane parallel to the screen of the touch device 10.

The position sensors 102 are sensors with both the sensing function and the camera shooting function. Each of the position sensors 102 comprises a camera and an infrared sensor. The infrared sensor is configured to detect whether there is any touch medium (e.g., the finger of a user) over the screen in real time, and when a touch medium over the screen is detected by the infrared sensor, the camera captures an image of the touch medium. Thereby, the image of the touch medium can be analyzed to acquire the coordinate value of the touch point of the touch medium in the image, thus obtaining the sensing coordinate value of the touch point with respect to the sensing coordinate system of the position sensor 102. For example, when the touch medium is a finger, the touch point is usually the fingertip area of the finger, so feature information representing the fingertip area of the finger can be preset. After being obtained, the image of the finger is analyzed to find image information consistent with the preset feature information of the fingertip area. The position of part of the image, which corresponds to the image information, in the whole image is just the position of the touch point in the image. Then, the touch point can be determined and, thereby, the coordinate value of the touch point in the image can be obtained.

Each of the position sensors 102 has its own sensing coordinate system, and the reference point of the sensing coordinate system of each of the position sensors 102 may be different from each other, so the sensing coordinate value acquired by each of the position sensors 102 is based on the sensing coordinate system of the position sensor 102 itself.

The controller 104 is configured to read the sensing coordinate values acquired by the position sensors 102 circularly. As shown in FIG. 1, the sensing range of each of the position sensors 102 only covers part of the touch device 10, so not each of the position sensors 102 can sense the touch medium over the screen. That is, when the user performs the overhead touch operation over the screen, sometimes not each of the position sensors 102 can obtain the sensing coordinate value of the touch point with respect to the sensing coordinate system of the position sensor itself. Moreover, the sensing ranges of the four position sensors 102 may overlap with each other. That is, when the user performs the overhead touch operation, maybe two, three or four of the position sensors 102 can sense the touch medium at the same time, i.e., maybe two, three or four of the position sensors 102 all can acquire the sensing coordinate value.

Therefore, when only the sensing coordinate value acquired by one position sensor 102 is read by the controller 104, for example, when the touch point A is only located in the sensing range of the first position sensor 102-1 as shown in FIG. 1 (that is, the overhead touch operation at this time is only performed in the sensing range of the first position sensor 102-1), other position sensors 102-2, 102-3, and 102-4 can not sense the overhead touch operation. Therefore, only the first position sensor 102-1 detects the sensing data, i.e., the sensing coordinate value (x1, y1) of the touch point A. In this case, the controller 104 only reads the sensing coordinate value (x1, y1) of the first position sensor 102-1 and calculates the screen coordinate value of the touch point A with respect to the screen coordinate system of the screen of the touch device 10 according to the sensing coordinate value (x1, y1) that is read. The controller 104 is further configured to operate according to the screen coordinate value serving as the overhead touch information so as to accomplish the overhead operation on the touch device 10, i.e., the user can operate the operational device 12 without the need of using the touch medium to touch the screen thereof.

When sensing coordinate values acquired by two or more of the position sensors 102 respectively are read by the controller 104, for example, when the touch point B is located in the overlapped region of the sensing ranges of the third position sensor 102-3 and the fourth position sensor 102-4 as shown in FIG. 1, the sensing coordinate value of the touch point B acquired by the third position sensor 102-3 with respect to the sensing coordinate system of the third position sensor 102-3 is (x3, y3), and the sensing coordinate value of the touch point B acquired by the fourth position sensor 102-4 with respect to the sensing coordinate system of the fourth position sensor 102-4 is (x4, y4). When the sensing coordinate values (x3, y3) and (x4, y4) of the two position sensors 102-3 and 102-4 are read by the controller 104, the controller 104 selects the sensing coordinate value acquired by the position sensor that has a predetermined priority level according to priority levels of the two position sensors 102-3 and 102-4 and calculates the screen coordinate value of the touch point B with respect to the screen coordinate system of the screen of the touch device 10 according to the sensing coordinate value acquired by the position sensor that has the predetermined priority level. The controller 104 is further configured to operate according to the screen coordinate value serving as the overhead touch information so as to accomplish the overhead operation on the touch device 10.

Further speaking, in this embodiment, the order of the priority levels of the four position sensors 102 ranked from high to low is as follows: the first position sensor 102-1, the second position sensor 102-2, the third position sensor 102-3 and the fourth position sensor 102-4. When the sensing coordinate values acquired by at least two of the position sensors 102 respectively are read, the controller 104 can select the sensing coordinate value corresponding to the position sensor that has the highest priority level to calculate the screen coordinate value. Therefore, in the aforesaid case, when the sensing coordinate values (x3, y3) and (x4, y4) of the third sensor 102-3 and the fourth sensor 102-4 are read by the controller 104, the controller 104 selects the sensing coordinate value (x3, y3) of the third sensor 102-3 as the effective coordinate value according to the priority levels of the third sensor 102-3 and the fourth sensor 102-4 so as to calculate the screen coordinate value of the touch point B with respect to the screen coordinate system of the screen of the touch device 10. Of course, the order of the priority levels of the four position sensors 102 may also be ranked in another way, e.g., from high to low as follows: the first position sensor 102-1, the third position sensor 102-3, the fourth position sensor 102-4 and the second position sensor 102-2. Additionally, the predetermined priority level may also be the lowest level, or no priority level is predetermined and instead, the user makes judgments on his or her own or makes decisions according to other preset conditions in practical operation, and no limitation is made thereto.

The above descriptions only take the case where the sensing coordinate values of two position sensors 102 are read by the controller 104 as an example. As for the cases where the sensing coordinate values of three or four position sensors are read, one of the sensing coordinate values can be selected for calculation according to the same principle, and thus they will not be further described herein.

Further speaking, the controller 104 is specifically configured to transform the sensing coordinate value that is read into the screen coordinate value of the touch point with respect to the screen coordinate system of the screen of the touch device 10 according to mapping relationships between the sensing coordinate system of the position sensor corresponding to the sensing coordinate value that is read and the screen coordinate system of the screen of the touch device 10. Specifically, when only the sensing coordinate value corresponding to one position sensor 102 (e.g., the sensing coordinate value (x1, y1) of the first position sensor 102-1) is read, the controller 104 transforms the sensing coordinate value (x1, y1) into the screen coordinate value of the screen coordinate system of the touch device 10 according to mapping relationships between the sensing coordinate system of the first position sensor 102-1 and the screen coordinate system of the touch device 10. When the sensing coordinate values corresponding to two or more position sensors 102 (e.g., the sensing coordinate values (x3, y3) and (x4, y4) of the third sensor 102-3 and the fourth sensor 102-4) are read, the controller 104 transforms the sensing coordinate value (x3, y3) into the screen coordinate value of the screen coordinate system of the touch device 10 according to mapping relationships between the sensing coordinate system of the third position sensor 102-3 and the screen coordinate system of the touch device 10 if the sensing coordinate value (x3, y3) of the third sensor 102-3 is selected as the effective coordinate value.

Different position sensors may correspond to different sensing coordinate systems, so the mapping relationships between the sensing coordinate systems corresponding to position sensors of different types or performances and the screen coordinate system of the screen of the touch device 10 may also be different. Moreover, for a same position sensor, different positions thereof in the non-display region 101 may also lead to different mapping relationships between the sensing coordinate system thereof and the screen coordinate system. Thus, after the position sensor and its position in the non-display region 101 are determined, the mapping relationships between the sensing coordinate system of the position sensor and the screen coordinate system of the screen of the touch device 10 are also determined accordingly. Therefore, the mapping relationships between the sensing coordinate system of the position sensor and the screen coordinate system of the screen of the touch device 10 can be obtained according to the properties of the position sensor and the position of the position sensor with respect to the touch device 10.

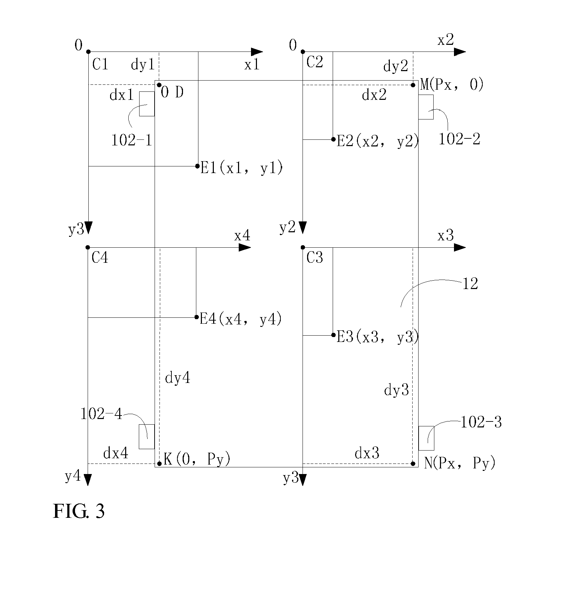

Hereinafter, two different mapping relationships will be taken as examples to describe specifically how to transform the sensing coordinate value into the screen coordinate value. The sensing coordinate system of the first position sensor 102-1 will be taken as an example for description. The first kind of mapping relationships: it shall be appreciated that the touch point is over the screen, so the sensing coordinate system of the first position sensor 102-1 is a sensing coordinate system in a plane parallel to and over the screen, and the two coordinate systems are located in two planes parallel to each other respectively. After the position of the first position sensor 102-1 in the non-display region 101 is determined, the coordinate origin C1 of the sensing coordinate system is determined accordingly. As shown in FIG. 3, if the proportional relationships of the sensing coordinate system of the first position sensor 102-1 and the screen coordinate system of the screen of the touch device 10 are the same (for example, if the scale unit of the horizontal coordinate of the first position sensor 102-1 is 1 and the scale unit of the vertical coordinate thereof is 2, the scale unit of the horizontal coordinate of the screen coordinate system is 1 and the scale unit of the vertical coordinate thereof is 2 accordingly), and if the vertical projection of the coordinate origin C1 of the sensing coordinate system of the first position sensor 102-1 on the plane of the screen is at the left side of the coordinate origin D of the screen coordinate system of the screen, the following mapping relationships between the sensing coordinate system of the first position sensor 102-1 and the screen coordinate system can be obtained according to the relationships between the proportional relationship of the sensing coordinate system and the proportional relationship of the screen coordinate system (i.e., they have the same proportional relationship) as well as the position of the coordinate origin C1 of the sensing coordinate system and the position of the coordinate origin D of the screen coordinate system:

$$xp1=x1-dx1, \ yp1=y1-dy1 \ldots\ldots\ldots\ldots\ldots\ldots\ldots\ldots(1)$$

(xp1, yp1) is the screen coordinate value of the touch point E1 within the sensing range of the first position sensor 102-1 with respect to the screen coordinate system, (x1, y1) is the sensing coordinate value of the touch point E1 with respect to the sensing coordinate system of the first position sensor 102-1, and (dx1, dy1) is the coordinate value of the acnode D at the top left corner of the screen (i.e., the origin of the screen coordinate system) with respect to the sensing coordinate system of the first position sensor 102-1. Accordingly, the mapping relationships between the sensing coordinate system of the first position sensor 102-1 and the screen coordinate system of the screen can be obtained. When the sensing coordinate value corresponding to the first position sensor 102-1 is selected by the controller 104, the screen coordinate value can be obtained through transformation according to the aforesaid mapping relationships.

More specifically, the mapping relationships between the sensing coordinate systems of other position sensors and the screen coordinate system are as follows: still referring to FIG. 3, the coordinate origin D (0, 0) of the screen coordinate system is located at the top left corner of the screen, and the sensing coordinate systems of the first position sensor 102-1, the second position sensor 102-2, the third position sensor 102-3 and the fourth position sensor 102-4 are coordinate systems taking C1, C2, C3 and C4 as coordinate origins respectively. As shown in FIG. 3, if the resolution of the screen is Px*Py, the coordinate values of the four acnodes of the screen are respectively D (0, 0), M (Px, 0), N (Px, Py), and K (0, Py) with respect to the screen coordinate system.

Thereby, the mapping relationships between the sensing coordinate system of the second position sensor 102-2 and the screen coordinate system of the screen are as follows:

$$xp2=Px-(dx2-x2), \ yp2=y2-dy2\ldots\ldots\ldots\ldots\ldots(2)$$

(xp2, yp2) is the screen coordinate value of the touch point E2 within the sensing range of the second position sensor 102-2 with respect to the screen coordinate system, (x2, y2) is the sensing coordinate value of the touch point E2 with respect to the sensing coordinate system of the second position sensor 102-2, and (dx2, dy2) is the coordinate value of the acnode M at the top right corner of the screen with respect to the sensing coordinate system of the second position sensor 102-2.

The mapping relationships between the sensing coordinate system of the third position sensor 103-3 and the screen coordinate system of the screen are as follows:

$$xp3=Px-(dx3-x3), \ yp3=Py-(dy3-y3)\ldots\ldots\ldots(3)$$

(xp3, yp3) is the screen coordinate value of the touch point E3 within the sensing range of the third position sensor 102-3 with respect to the screen coordinate system, (x3, y3) is the sensing coordinate value of the touch point E3 with respect to the sensing coordinate system of the third position sensor 102-3, and (dx3, dy3) is the coordinate value of the acnode N at the bottom right corner of the screen with respect to the sensing coordinate system of the third position sensor 102-3. The mapping relationships between the sensing coordinate system of the fourth position sensor 102-4 and the screen coordinate system of the screen are as follows:

$$xp4=x4-dx4, \quad yp4=Py-(dy4-y4)\ldots\ldots\ldots\ldots\ldots\ldots(4)$$

(xp4, yp4) is the screen coordinate value of the touch point E4 within the sensing range of the fourth position sensor 102-4 with respect to the screen coordinate system, (x4, y4) is the sensing coordinate value of the touch point E4 with respect to the sensing coordinate system of the fourth position sensor 102-4, and (dx4, dy4) is the coordinate value of the acnode K at the bottom left corner of the screen with respect to the sensing coordinate system of the fourth position sensor 102-4.

Accordingly, the screen coordinate value of the touch point with respect to the screen coordinate system of the screen can be obtained according to the mapping relationships between the sensing coordinate system of each of the aforesaid position sensors 102 and the screen coordinate system. Further speaking, in order to make the transformation results more accurate, the aforesaid formulas are multiplied by an empirical coefficient to turn the formulas (1), (2), (3) and (4) into the following forms:

$$xp1=(x1-dx1)*n, \quad yp1=(y1-dy1)*n\ldots\ldots\ldots..(1)$$

$$xp2=Px-(dx2-x2)*n, \quad yp2=(y2-dy2)*n\ldots\ldots.....(2)$$

$$xp3=Px-(dx3-x3)*n, \quad yp3=Py-(dy3-y3)*n\ldots\ldots(3)$$

$$xp4=(x4-dx4)*n, \quad yp4=Py-(dy4-y4)*n\ldots\ldots\ldots.(4)$$

where, n is the empirical coefficient obtained through production tests, and different resolutions of position sensors and screens correspond to different empirical coefficients.

Moreover, in order to eliminate measurement errors of the position sensor and errors caused by the shake of a finger so as to improve the measurement accuracy, the position sensor 102 acquires m (m is no smaller than 2) sensing coordinate values of a touch point with respect to the sensing coordinate system of the position sensor 102 itself when the touch point over the screen is sensed by the position sensor 102 in embodiments of the present disclosure. The value of m may be set according to the sensing speed of the position sensor. If the sensing frequency of the position sensor is relatively high, m may be set to be a relatively large value; and if the sensing frequency of the position sensor is relatively low, m may be set to be a relatively small value. The controller 104 is configured to read the m sensing coordinate values acquired by the position sensor 102 and average the m sensing coordinate values to obtain the average sensing coordinate value, and then calculate the screen coordinate value of the touch point with respect to the screen coordinate system according to the average sensing coordinate value. The measurement accuracy can be improved through the averaging operation.

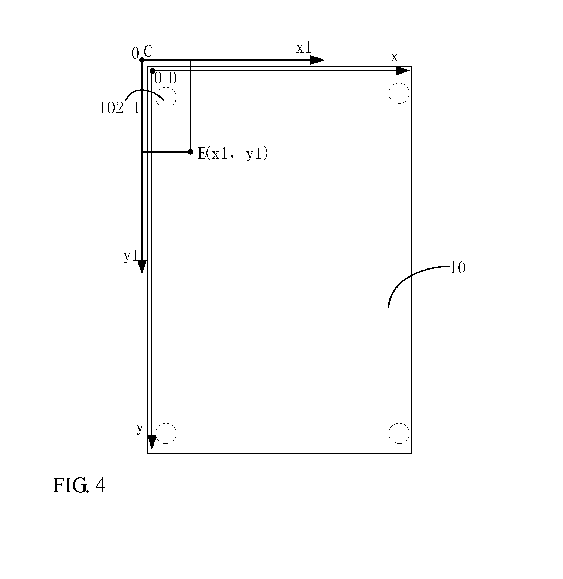

The second kind of mapping relationships: as shown in FIG. 4, take the first position sensor 102-1 as an example. If the sensing coordinate system of the first position sensor 102-1 and the screen coordinate system of the screen of the touch device 10 have different proportional relationships from each other with a ratio between the scale units of the horizontal coordinates of the aforesaid two coordinate systems being fx and a ratio between the scale units of the vertical coordinates of the aforesaid two coordinate systems being fy (e.g., if the scale units of both the horizontal coordinate and the vertical coordinate of the first position sensor 102-1 are 1, and the smallest units of both the horizontal coordinate and the vertical coordinate of the screen coordinate system are also 1, then both fx and fy are 1), and if the vertical projection of the coordinate origin C of the sensing coordinate system of the first position sensor 102-1 in the plane of the screen coincides with the coordinate origin D of the screen coordinate system of the screen (i.e., the sensing coordinate system and the screen coordinate system have the same reference points), then the following mapping relationships between the sensing coordinate system and the screen coordinate system can be obtained according to the ratio relationships between the scale units of the sensing coordinate system and the screen coordinate system: (x, y)=(x1/fx, y1/fy). When the sensing coordinate value corresponding to the first position sensor 102-1 is selected by the controller 104, the screen coordinate value can be obtained through transformation according to the aforesaid mapping relationships. Although mapping relationships of only two circumstances are illustrated above, mapping relationships of other circumstances can be obtained according to the same principle and thus will not be further described herein.

No matter whether the first kind of mapping relationships or the second kind of mapping relationships hold, or even in cases where two or more kinds of mapping relationships exist, the touch point can be limited within the screen range of the touch device 10. That is, only the touch point defined over the orthographic projection of the screen of the touch device 10 is an effective touch point, and touch operations performed outside the orthographic projection of the screen over the touch device 10 are defined to be ineffective. In this case, the touch range in the plane is just the same as that of the conventional touch screen for the user.

Of course, the touch point may also be defined to be effective even if it is outside the orthographic projection of the screen over the touch device 10, and this will be described from the following two aspects:

1) there is no mapping relationship between the touch point defined outside the orthographic projection of the screen over the touch device 10 and the screen of the touch device 10, but such a touch point may be used for auxiliary control. For example, once it is sensed that the touch point has moved from over the orthographic projection of the screen to the outside, an operation such as page turning is performed;
2) the touch points defined over or outside the orthographic projection of the screen of the touch device 10 have unified mapping relationships with the screen of the touch device 10. In this case, even if the operation is performed outside the orthographic projection of the screen, operating traces thereof may also be displayed on the screen of the touch device 10 and corresponding screen touch instructions may be executed in response to facilitate the user in performing the overhead touch operation within a range larger than the size of the screen.

Furthermore, for different position sensors, the sensing coordinate values they detect will also be affected by distances between the touch points and the screen. That is, if the height from the touch point of a finger to the screen varies, the sensing horizontal coordinate value of the touch point with respect to the sensing coordinate system will also vary slightly. Thus, in order to make the detected sensing coordinate value more accurate, the position sensor 102 may also detect the distance between the touch point and the screen so as to determine the sensing horizontal coordinate value according to the distance. For example, the coordinate value can be corrected according to a preset table of error of the horizontal coordinate versus the distance to improve the accuracy.

The user's overhead touch operation on the touch device 10 may be an overhead mouse cursor sliding operation or an overhead slide-to-unlock operation and so on.

For example, when the finger moves over the screen of the touch device 10, the position sensor 102 acquires several sensing coordinate values of the touch point of the finger continuously while the finger is moving, the controller 104 calculates several corresponding screen coordinate values according to the effective sensing coordinate values, and the touch device 10 makes the mouse cursor of the touch device 10 move along the trace defined by the several screen coordinate values according to the several screen coordinate values, thus accomplishing the overhead mouse cursor sliding operation.

As another example, to accomplish the slide-to-unlock operation on the touch device 10, the touch device 10 obtains an overhead sliding curve of the finger according to the received screen coordinate values. By presetting an unlocking curve and comparing the obtained curve with the preset curve, the touch operation of the user will be regarded as the unlocking operation when the similarity of the two curves is not less than a threshold value (e.g., 80% or 90%); and then the touch device 10 performs the unlocking function.

In embodiments of the present disclosure, the position sensor is also configured to acquire the size of an overhead touch object and the distance between the overhead touch object and the position sensor so as to accomplish the overhead touch operation according to the size of the overhead touch object and the distance between the overhead touch object and the position sensor.

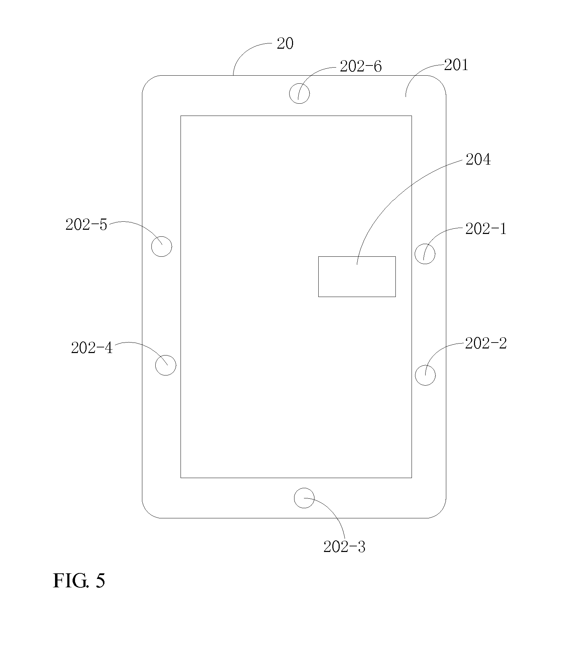

Referring to FIG. 5, another embodiment of the touch system of the present disclosure differs from the embodiments shown in FIG. 1 and FIG. 2 in that, there are six position sensors 202 in this embodiment, i.e., the first position sensor 202-1, the second position sensor 202-2, the third position sensor 202-3, the fourth position sensor 202-4, the fifth position sensor 202-5 and the third position sensor 202-6.

The first position sensor 202-1 and the second position sensor 202-2 are located in the non-display region 201 at the right side of the screen and are located symmetrically with respect to the horizontal center line of the screen; the fourth position sensor 202-4 and the fifth position sensor 202-5 are located in the non-display region 201 at the left side of the screen and are located symmetrically with respect to the horizontal center line of the screen; the third position sensor 202-3 is located in the non-display region 201 at the bottom side of the screen, the sixth position sensor 202-6 is located in the non-display region 201 at the top side of the screen, and the third position sensor 202-3 and the sixth position sensor 202-6 are located symmetrically with respect to the horizontal center line of the screen. This allows for a more pleasant appearance of the touch system. Moreover, the first position sensor 202-1 and the fifth position sensor 202-5 are located symmetrically with respect to the vertical center line of the screen, and so on. Of course, it may also be that three position sensors 202 are located in the non-display region 201 at a same side of the screen, the other three position sensors 202 are located in the non-display region 201 at the opposite side, and the opposite position sensors are located symmetrically with respect to the vertical center line of the screen.

The sensing range of each of the position sensors 202 covers at least 1/6 of the touch device 20. Of course, the sensing range of each of the position sensors 202 may also cover the touch device in other manners as long as it can be ensured that the whole touch device 20 is within the sensing range.

The order of the priority levels of the six position sensors ranked from high to low is as follows: the first position sensor 202-1, the second position sensor 202-2, the third position sensor 202-3, the fourth position sensor 202-4, the fifth position sensor 202-5 and the third position sensor 202-6. When only the sensing coordinate value of one position sensor 202 is read, the controller 204 calculates the screen coordinate value of the touch point with respect to the screen coordinate system of the screen of the touch device 20 according to the sensing coordinate value that is read. Specifically, the controller 204 transforms the sensing coordinate value that is read into the screen coordinate value of the touch point with respect to the screen coordinate system of the screen of the touch device 20 according to the mapping relationships between the sensing coordinate system of the position sensor 202 corresponding to the sensing coordinate value that is read and the screen coordinate system of the screen of the touch device 20. The mapping relationships are related to the position of the position sensor 202 with respect to the touch device 20. When sensing coordinate values acquired by two or more of the position sensors 202 respectively are read, the controller 204 selects the sensing coordinate value of one of the position sensors that has a predetermined priority level as the effective sensing coordinate value according to priority levels of the more than two position sensors 202. Specifically, the controller 204 selects the sensing coordinate value of the position sensor that has the highest priority level as the effective sensing coordinate value and calculates the screen coordinate value of the touch point with respect to the screen coordinate system of the screen of the touch device 20 according to the sensing coordinate value of the position sensor that has the highest priority level.

The controller 204 is further configured to operate according to the screen coordinate value serving as the overhead touch information so as to accomplish the overhead operation on the touch device 20.

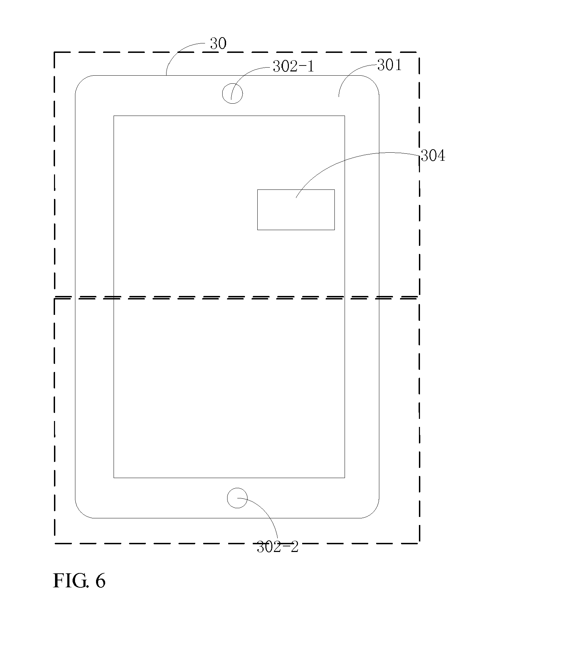

Referring to FIG. 6, yet another embodiment of the touch system of the present disclosure differs from the embodiments shown in FIG. 1 and FIG. 2 in that, there are two position sensors 302 in this embodiment, i.e., the first position sensor 302-1 and the second position sensor 302-2. The two position sensors 302 are located in the non-display region 301 at the top and the bottom sides of the screen and are located symmetrically with respect to the horizontal center line of the screen of the touch device 30. Of course, the two position sensors 302 may be disposed at different positions around the touch device 30 depending on practical needs. For example, the two position sensors 302 may be disposed in the non-display region 301 at the left and the right sides respectively or disposed in the non-display region 301 at the same side.

The sensing range of each of the position sensors 302 covers at least 1/2 of the touch device 30, i.e., the sensing range of the first position sensor 302-1 covers the upper half of the touch device 30 and the sensing range of the second position sensor 302-2 covers the lower half of the touch device 30, as shown by the two regions circled by the dashed line in FIG. 6. Of course, the sensing ranges of the position sensors may also cover the touch device in other manners, e.g., the sensing range of one of the position sensors 302 only covers 1/4 of the touch device 30 and the sensing range of the other of the position sensors 302 covers more than 3/4 of the touch device as long as the whole touch device 30 is within the sensing range.

The order of the priority levels of the two position sensors ranked from high to low is as follows: the first position sensor 302-1 and the second position sensor 302-2. When only the sensing coordinate value of one position sensor 302 is read, the controller 304 calculates the screen coordinate value of the touch point with respect to the screen coordinate system of the screen of the touch device 30 according to the sensing coordinate value that is read. Specifically, the controller 304 transforms the sensing coordinate value that is read into the screen coordinate value of the touch point with respect to the screen coordinate system of the screen of the touch device 30 according to the mapping relationships between the sensing coordinate system of the position sensor 302 corresponding to the sensing coordinate value that is read and the screen coordinate system of the screen of the touch device 30. The mapping relationships are related to the position of the position sensor 302 on the screen. When sensing coordinate values acquired by two position sensors 302 respectively are read, the controller 304 selects the sensing coordinate value of one of the position sensors that has a predetermined priority level as the effective sensing coordinate value according to priority levels of the two position sensors 302. Specifically, the controller 304 selects the sensing coordinate value of the position sensor that has the highest priority level as the effective sensing coordinate value and calculates the screen coordinate value of the touch point with respect to the screen coordinate system of the screen of the touch device 30 according to the sensing coordinate value of the position sensor that has the highest priority level.

The controller 304 is further configured to operate according to the screen coordinate value serving as the overhead touch information so as to accomplish the overhead operation on the touch device 30.

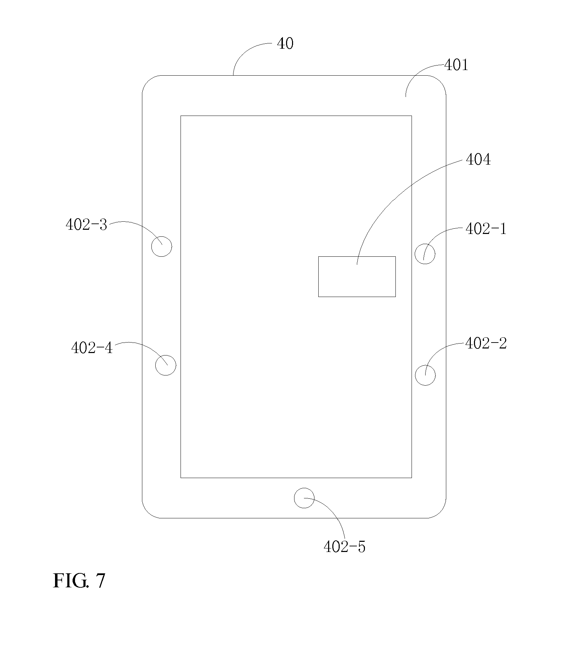

Referring to FIG. 7, another embodiment of the touch system of the present disclosure differs from the embodiment shown in FIG. 1 and FIG. 2 in that, there are five position sensors 402 in this embodiment, i.e., the first position sensor 402-1, the second position sensor 402-2, the third position sensor 402-3, the fourth position sensor 402-4 and the fifth position sensor 402-5. The first position sensor 402-1 and the second position sensor 402-2 are located in the non-display region 401 at the right side of the screen and are located symmetrically with respect to the horizontal center line of the screen of the touch device 40; the third position sensor 402-3 and the fourth position sensor 402-4 are located in the non-display region 401 at the left side of the screen and are located symmetrically with respect to the horizontal center line of the screen of the touch device 40; and the fifth position sensor 402-5 is located in the non-display region 401 at the bottom side of the screen. Symmetrical distribution of part of the position sensors 402 allows for a more pleasant appearance of the touch system. Of course, the five position sensors 402 may also be disposed at different positions around the touch device 40 depending on practical needs.

The sensing range of each of the position sensors 402 covers at least 1/5 of the touch device 40. Of course, the sensing ranges of the position sensors may also cover the touch device in other manners, and no limitation is made thereto as long as the whole touch device 40 is within the sensing range. The order of the priority levels of the five position sensors ranked from high to low is as follows: the first position sensor 402-1, the second position sensor 402-2, the third position sensor 402-3, the fourth position sensor 402-4 and the fifth position sensor 402-5. When only the sensing coordinate value of one position sensor 402 is read, the controller 404 calculates the screen coordinate value of the touch point with respect to the screen coordinate system of the screen of the touch device 40 according to the sensing coordinate value that is read. Specifically, the controller 404 transforms the sensing coordinate value that is read into the screen coordinate value of the touch point with respect to the screen coordinate system of the screen of the touch device 40 according to the mapping relationships between the sensing coordinate system of the position sensor 402 corresponding to the sensing coordinate value that is read and the screen coordinate system of the screen of the touch device 40. The mapping relationships are related to the position of the position sensor 402 on the screen. When sensing coordinate values acquired by two or more of the position sensors 402 respectively are read, the controller 404 selects the sensing coordinate value of one of the position sensors that has a predetermined priority level as the effective sensing coordinate value according to priority levels of the more than two position sensors 402. Specifically, the controller 404 selects the sensing coordinate value of the position sensor that has the highest priority level as the effective sensing coordinate value and calculates the screen coordinate value of the touch point with respect to the screen coordinate system of the screen of the touch device 40 according to the sensing coordinate value of the position sensor that has the highest priority level.

The controller 404 is further configured to operate according to the screen coordinate value serving as the overhead touch information so as to accomplish the overhead operation on the touch device 40.

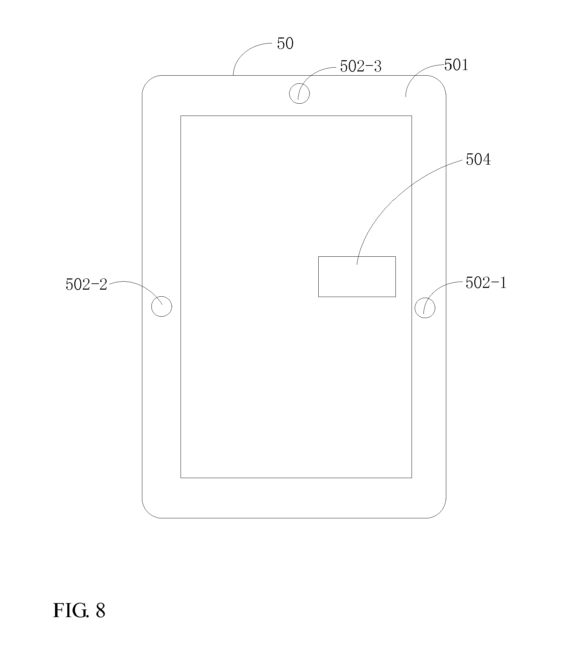

Referring to FIG. 8, another embodiment of the touch system of the present disclosure differs from the embodiments shown in FIG. 1 and FIG. 2 in that, there are three position sensors 502 in this embodiment, i.e., the first position sensor 502-1, the second position sensor 502-2 and the third position sensor 502-3. In this embodiment, the first position sensor 502-1 is located in the non-display region 501 at the right side of the screen, the second position sensor 502-2 is located in the non-display region 501 at the left side of the screen, and the third position sensor 502-3 is located in the non-display region 501 at the top side of the screen. Moreover, the first position sensor 502-1 and the second position sensor 502-2 are located symmetrically with respect to the vertical center line of the screen of the touch device 50, which allows for a more pleasant appearance of the touch device 50.

The sensing range of each of the position sensors 502 covers at least 1/3 of the touch device 50. Of course, the sensing ranges of the position sensors may also cover the touch device in other manners, and no limitation is made thereto as long as the whole touch device 50 is within the sensing range. The order of the priority levels of the three position sensors ranked from high to low is as follows: the first position sensor 502-1, the second position sensor 502-2 and the third position sensor 502-3. When only the sensing coordinate value of one position sensor 502 is read, the controller 504 calculates the screen coordinate value of the touch point with respect to the screen coordinate system of the screen of the touch device 50 according to the sensing coordinate value that is read. Specifically, the controller 504 transforms the sensing coordinate value that is read into the screen coordinate value of the touch point with respect to the screen coordinate system of the screen of the touch device 50 according to the mapping relationships between the sensing coordinate system of the position sensor 502 corresponding to the sensing coordinate value that is read and the screen coordinate system of the screen of the touch device 50. The mapping relationships are related to the position of the position sensor 502 with respect to the touch device 50. When sensing coordinate values acquired by two or more of the position sensors 502 respectively are read, the controller 504 selects the sensing coordinate value of one of the position sensors that has a predetermined priority level as the effective sensing coordinate value according to priority levels of the more than two position sensors 502. Specifically, the controller 504 selects the sensing coordinate value of the position sensor that has the highest priority level as the effective sensing coordinate value and calculates the screen coordinate value of the touch point with respect to the screen coordinate system of the screen of the touch device 50 according to the sensing coordinate value of the position sensor that has the highest priority level.

The controller 504 is further configured to operate according to the screen coordinate value serving as the overhead touch information so as to accomplish the overhead operation on the touch device 50.

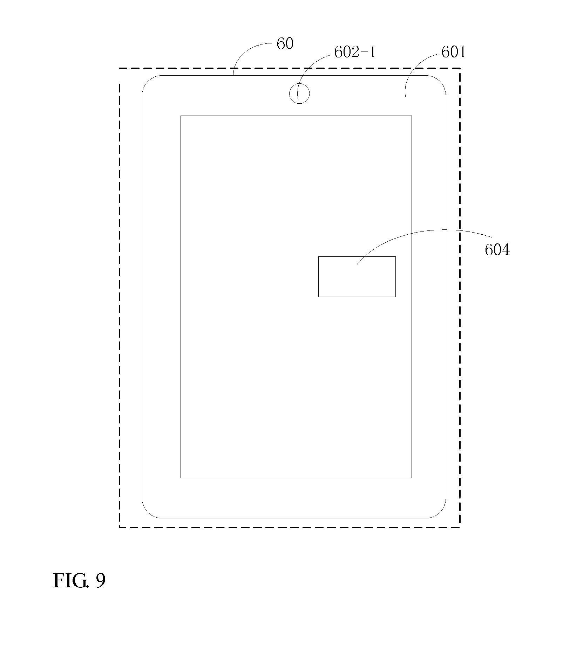

Referring to FIG. 9, another embodiment of the touch system of the present disclosure differs from the embodiments shown in FIG. 1 and FIG. 2 in that, there is one position sensor 602 in this embodiment, i.e., the first position sensor 602-1. In this embodiment, the first position sensor 602-1 is located in the non-display region 601 at the top side of the screen. Of course, the position sensor 602-1 may also be disposed at different positions of the non-display region 601 of the touch device 60 depending on practical needs.

The sensing range of the position sensor 602-1 covers at least the whole touch device 60, as shown by the region circled by the dashed line in FIG. 9, so as to ensure that touch operations can be sensed and sensing sensitivity can be improved.

When the sensing coordinate value of the position sensor 602-1 is read, the controller 604 calculates the screen coordinate value of the touch point with respect to the screen coordinate system of the screen of the touch device 60 according to the sensing coordinate value that is read. Specifically, the controller 604 transforms the sensing coordinate value that is read into the screen coordinate value of the touch point with respect to the screen coordinate system of the screen of the touch device 60 according to the mapping relationships between the sensing coordinate system of the position sensor 602-1 corresponding to the sensing coordinate value that is read and the screen coordinate system of the screen of the touch device 60. The mapping relationships are related to the position of the position sensor 602 with respect to the touch device 60.

The controller 604 is further configured to operate according to the screen coordinate value serving as the overhead touch information so as to accomplish the overhead operation on the touch device 60.

Moreover, the screen coordinate value of the touch point with respect to the screen coordinate system of the screen may also be calculated not according to the mapping relationships between the sensing coordinate system and the screen coordinate system, but according to the position of the position sensor with respect to the touch device and the distance between the touch point and the position sensor for example.

In embodiments of the touch device of the present disclosure, the position sensor may also be a front-facing camera on the screen of the touch device. That is, by using the front-facing camera of the touch device as one of the position sensors and imparting the front-facing camera with the infrared sensing function so that the front-facing camera can serve as both the front-facing camera of the touch device and the position sensor, the overhead touch operation can be sensed.

In embodiments of the present disclosure, the position sensor is not limited to the combination of an infrared sensor and a camera, but may be any device that can detect the overhead touch operation, such as a distance sensor. In solutions where two or more position sensors are used to control the touch operation detection, instead of selecting the coordinate value detected by one position sensor, the data detected by two or more position sensors can be combined to calculate a synthetical value so as to improve the accuracy. For example, the coordinate value of an object may be calculated by making use of the triangle operational formula according to two or more distance values of the object detected by two or more position sensors, the distance value(s) between the two or more position sensors or the angle of the object with respect to each of the position sensors. Even, the plane of the coordinate system of the position sensor itself is not necessarily parallel to the plane of the screen; each of or each set of the position sensors defines a touch plane; and the touch plane(s) is or are not parallel to the touch plane, thus accomplishing not only the overhead touch but also the three-dimensional multi-plane touch.

In embodiments of the present disclosure, the mapping relationships between the sensing coordinate system of the position sensor corresponding to the sensing coordinate value and the screen coordinate system of the screen of the touch device may be preset. Of course, the aforesaid mapping relationships may also be calculated by collecting relevant hardware information of the device so that the mapping relationships can match automatically with the device without any user involvement when the present disclosure is applied to screens of touch devices having different sizes or screens having different resolutions. In this way, the present disclosure will have better applicability.

What described above are only the embodiments of the present disclosure, but are not intended to limit the scope of the present disclosure. Any equivalent structures or equivalent process flow modifications that are made according to the specification and the attached drawings of the present disclosure, or any direct or indirect applications of the present disclosure in other related technical fields shall all be covered within the scope of the present disclosure.

**Claims**

1. A touch device (10,20,30,40,50,60), comprising:

    at least one position sensor (102-1,102-2,102-3,102-4;202-1, 202-2,202-3, 202-4,202-5, 202-6;302-1, 302-2;402-1,4 02-2,402-3,402-4,402-5;502-1,502-2,502-3;602-1); and a controller (104,204,304,404,504,604) connected to the at least one position sensor;

wherein the at least one position sensor is disposed in a non-display region (101,201,301,401,501,601) of a screen of the touch device to sense an overhead touch operation over the at least one position sensor; and the controller is configured to obtain overhead touch information according to the overhead touch operation so as to operate according to the overhead touch information.

2. The touch device of claim 1, wherein:

the at least one position sensor is specifically configured to acquire a sensing coordinate value (x1,y1;x2,y2;x3,y3) of a touch point (A,B,E1,E2,E3,E4) over the screen of the touch device with respect to a sensing coordinate system (xp1,yp1;xp2,yp2;xp3,yp3;xp4,yp4) of the position sensor itself; the controller is configured to, when only a sensing coordinate value acquired by one position sensor is read, calculate a screen coordinate value of the touch point with respect to a screen coordinate system of the screen of the touch device according to the sensing coordinate value that is read, and is configured to, when sensing coordinate values acquired by at least two of the position sensors respectively are read, select the sensing coordinate value acquired by one of the at least two position sensors that has a predetermined priority level according to priority levels of the at least two position sensors and calculate the screen coordinate value of the touch point with respect to the screen coordinate system of the screen of the touch device according to the sensing coordinate value acquired by the position sensor that has the predetermined priority level; and the controller is further configured to operate according to the screen coordinate value serving as the overhead touch information.

3. The touch device of claim 2, wherein:

the sensing coordinate value is a coordinate value of the touch point in a plane parallel to the screen of the touch device, and the controller is specifically configured to transform the sensing coordinate value that is read into the screen coordinate value of the touch point with respect to the screen coordinate system of the screen of the touch device according to mapping relationships between the sensing coordinate system of the position sensor corresponding to the sensing coordinate value that is read and the screen coordinate system of the screen of the touch device.

4. The touch device of any of claims 1 to 3, wherein:

some of the position sensors are located in the non-display region at a top side of the screen of the touch device, while the rest of the position sensors are located in the non-display region at a bottom side of the screen of the touch device.

5. The touch device of any of claims 1 to 3, wherein:

some of the position sensors are located in the non-display region at a left side of the screen of the touch device, while the rest of the position sensors are located in the non-display region at a right side of the screen of the touch device.

6. The touch device of any of claims 1 to 3, wherein:

some of the position sensors are located in the non-display region at a left side of the screen of the touch device, while the rest of the position sensors are located in the non-display region at a bottom side of the screen of the touch device.

7. A touch method used in a touch device, comprising:

sensing an overhead touch operation over a screen of the touch device by at least one position sensor; and obtaining overhead touch information by a controller of the touch device according to the overhead touch operation; and performing a corresponding operation according to the overhead touch information.

8. The touch method of claim 7, further comprising:

using the at least one position sensor of the touch device, to acquiring at least one sensing coordinate value of a touch point over the screen of the touch device with respect to a sensing coordinate system of the position sensor itself;

when only a sensing coordinate value acquired by one position sensor is read by a controller of the touch device, calculating a screen coordinate value of the touch point with respect to a screen coordinate system of the screen of the touch device according to the sensing coordinate value that is read by the controller;

when sensing coordinate values acquired by at least two position sensors respectively are read by the controller of the touch device, selecting a sensing coordinate value acquired by one of the at least two position sensors that has a predetermined priority level according to priority levels of the at least two position sensors, and calculating the screen coordinate value of the touch point with respect to the screen coordinate system of the screen of the touch device according to the sensing coordinate value acquired by the position sensor that has the predetermined priority level; and

performing the corresponding operation according to the screen coordinate value serving as the overhead touch information.

9.  The touch method of claim 8, wherein:

the sensing coordinate value is a coordinate value of the touch point in a plane parallel to the screen of the touch device, and the sensing coordinate value that is read is transformed into the screen coordinate value of the touch point with respect to the screen coordinate system of the screen of the touch device according to mapping relationships between the sensing coordinate system of the position sensor corresponding to the sensing coordinate value that is read and the screen coordinate system of the screen of the touch device.

10. The touch method of any of claims 7 to 9, wherein the at least one position sensor is disposed in a non-display region of the screen of the touch device.

FIG. 1

10    101

102-1    102-2

102-4    102-3

FIG. 2

FIG. 3

FIG. 4

FIG. 5

FIG. 6

FIG. 7

FIG. 8

FIG. 9